**Europäisches Patentamt**

**European Patent Office**

**Office européen des brevets**

(19)

(11) **EP 1 186 986 A2**

(12) **EUROPEAN PATENT APPLICATION**

(43) Date of publication:
**13.03.2002 Bulletin 2002/11**

(51) Int Cl.$^7$: **G06F 3/00**, G06F 17/30

(21) Application number: **01480031.2**

(22) Date of filing: **10.05.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **Carro, Fernando Inceris**<br>**46182 Valencia (ES)** |
| (30) Priority: **29.08.2000 EP 00480080** | (74) Representative: **Etorre, Yves Nicolas**<br>**Compagnie IBM France,**<br>**Département Propriété Intellectuelle**<br>**06610 La Gaude (FR)** |
| (71) Applicant: **INTERNATIONAL BUSINESS MACHINES CORPORATION**<br>**Armonk, NY 10504 (US)** | |

(54) **System and method for locating on a physical document items referenced in an electronic document**

(57)     The present invention discloses a system and method of creating in an electronic document one or a plurality of hyperlinks to a physical document for locating on said physical document one or a plurality of items referenced in this electronic document, from an user system connected to an opto-touch foil placed on or under the physical document. The method comprises the steps of:

- defining referenced items in the electronic document; for each item referenced in the electronic document;
- determining absolute coordinates;
- defining an hyperlink to the physical document;
- encoding the absolute coordinates in the hyperlink.

The present invention further discloses an electronic document comprising one or a plurality of referenced items, each referenced item comprising an hyperlink to a physical document, each hyperlink comprising encoded absolute coordinates of the corresponding referenced item, this hyperlink being used for locating the item on said physical document from an user system connected to an opto-touch foil placed on or under this physical document.

The present invention further discloses a system and method of locating on a physical document one or a plurality of items referenced in an electronic document comprising hyperlinks to this physical document. The method for use in a user system connected to an opto-touch foil placed on or under said physical document, comprising the steps of:

- identifying the one or plurality of items referenced in this electronic document;
- identifying the physical document; for each referenced item that has been identified :
- computing from the absolute coordinates, foil coordinates corresponding to the position of the item on the physical document.

Fig. 5: Components of the preferred embodiment of the invention

## Description

### *Field of the invention*

The present invention relates to interactive multimedia systems and more particularly to a method and system for locating on a physical document items referenced in an electronic document. In a preferred embodiment, the present invention discloses a method and system for highlighting on a paper map the geographic position of places referenced in a Web page.

### *Background of the invention*

### INTERNET

The Internet is a global network of computers and computers networks (the "Net"). The Internet connects computers that use a variety of different operating systems or languages, including UNIX, DOS, Windows, Macintosh, and others. To facilitate and allow the communication among these various systems and languages, the Internet uses a language referred to as TCP/IP ("Transmission Control Protocol/Internet Protocol"). TCP/IP protocol supports three basic applications on the Internet :

- transmitting and receiving electronic mail,
- logging into remote computers (the "Telnet"), and
- transferring files and programs from one computer to another ("FTP" or "File Transfer Protocol").

### WORLD WIDE WEB

With the increasing size and complexity of the Internet, tools have been developed to help find information on the network, often called navigators or navigation systems. Navigation systems that have been developed include standards such as Archie, Gopher and WAIS. The World Wide Web ("WWW" or "the Web") is a recent superior navigation system. The Web is:

- an Internet-based navigation system,
- an information distribution and management system for the Internet, and
- a dynamic format for communicating on the Web.

The Web seamlessly, for the use, integrates format of information, including still images, text, audio and video. A user on the Web using a graphical user interface ("GUI", pronounced "gooey") may transparently communicate with different host computers on the system, different system applications (including FTP and Telnet), and different information formats for files and documents including, for example, text, sound and graphics.

### HYPERMEDIA

The Web uses hypertext and hypermedia. Hypertext is a subset of hypermedia and refers to computer-based "documents" in which readers move from one place to another in a document, or to another document, in a non-linear manner. To do this, the Web uses a client-server architecture. The Web servers enable the user to access hypertext and hypermedia information through the Web and the user's computer. (The user's computer is referred to as a client computer of the Web Server computers.) The clients send requests to the Web Servers, which react, search and respond. The Web allows client application software to request and receive hypermedia documents (including formatted text, audio, video and graphics) with hypertext link capabilities to other hypermedia documents, from a Web file server.
The Web, then, can be viewed as a collection of document files residing on Web host computers that are interconnected by hyperlinks using networking protocols, forming a virtual "web" that spans the Internet.

### UNIFORM RESOURCE LOCATORS

A resource of the Internet is unambiguously identified by a Uniform Resource Locator (URL), which is a pointer to a particular resource at a particular location. A URL specifies the protocol used to access a server (e.g. HTTP, FTP,..), the name of the server, and the location of a file on that server.

**HYPER TEXT TRANSFER PROTOCOL**

Each Web page that appears on client monitors of the Web may appear as a complex document that integrates, for example, text, images, sounds and animation. Each such page may also contain hyperlinks to other Web documents so that a user at a client computer using a mouse may click on icons and may activate hyperlink jumps to a new page (which is a graphical representation of another document file) on the same or a different Web server.

A Web server is a software program on a Web host computer that answers requests from Web clients, typically over the Internet. All Web servers use a language or protocol to communicate with Web clients which is called Hyper Text Transfer Protocol ("HTTP"). All types of data can be exchanged among Web servers and clients using this protocol, including Hyper Text Markup Language ("HTML"), graphics, sound and video. HTML describes the layout, contents and hyperlinks of the documents and pages. Web clients when browsing :

- convert user specified commands into HTTP GET requests,
- connect to the appropriate Web server to get information, and
- wait for a response. The response from the server can be the requested document or an error message.

After the document or an error message is returned, the connection between the Web client and the Web server is closed.

First version of HTTP is a stateless protocol. That is, with HTTP there is no continuous connection between each client and each server. The Web client using HTTP receives a response as HTML data or other data. This description applies to version 1.0 of HTTP protocol, while the new version 1.1 breaks this barrier of stateless protocol by keeping the connection between the server and client alive under certain conditions.

**BROWSER**

After receipt, the Web client formats and presents the data or activates an ancillary application such a sound player to present the data. To do this, the server or the client determines the various types of data received. The Web Client is also referred to as the Web Browser, since it in fact browses documents retrieved from the Web Server.

**HARD-COPY DOCUMENTS**

During the last years, due mainly to the widespread use of personal computers and the universal access of millions of users to the World Wide Web, the "multimedia publishing" has veritably exploded. On one hand, due to the widespread penetration of CD-ROM drives an enormous amount of multimedia titles combining text, images and sounds, are now accessible to owners of personal computers. On another hand, an incredible amount of hypermedia information is today accessible via the Internet on the World Wide Web.

The study of the different information needs shows that there is a common need. For all kind of reasons, people more and more often require to be rapidly and easily informed about their environment. They want to have information about the resources or services located in the different regions of the world, in rural, industrial or urban areas. This common need has been identified since long ago by all Geographic Information Systems (GIS) providers, cartographic information providers and, more recently, by most of the Internet information providers (e.g., Netscape Local Channel on ***http://www.netscape.com/local/index.html***). These institutions and many other (e.g.: travel agencies, government agencies, local authorities, etc.) today provide geographic and cartographic information in the Web by means of several services. Basically, these services enable the user to access, browse or download many different types of digitized maps covering practically all regions of the world. During the last years, due mainly to the widespread use of the Global Positioning System (GPS) and in-vehicle computerized navigation systems, and to the universal access of millions of users to the World Wide Web, the "digital mapping publishing" has veritably exploded. Due to the widespread penetration of CD-ROM drives an enormous amount of geographic and cartographic titles are now available to owners of personal computer. Because Internet users can access GIS applications from their browsers without purchasing proprietary GIS software, WebGIS has the potential to make Distributed Geographic Information (DGI) available to a very large worldwide audience. Today WebGIS makes possible to add GIS functionality to a wide range of network-based applications in business, government, and education. Due to this rapid evolution, an incredible amount of cartographic content is today accessible via the Internet, particularly the World Wide Web.

Even if electronic digital maps can be accessed and retrieved throughout the Web by any Internet device (e. g., by a Personal Digital Assistant (PDA) or WAP enabled smart phone), some drawbacks persist. The retrieval, storage and display of high resolution digital maps require a high communication bandwidth, a large memory, and a high graphic resolution. The wireless mobile environment, where small, economic, lightweight hand held devices are commonly used (such as cell phones and Personal Digital Assistants), imposes some constraints for transferring, storing, displaying and manipulating in a Web Browser large image files such as high resolution digital maps. Nowadays, practically all wireless devices are small devices, limited in communications speed, storage capacity, display areas and energy consumption.

To overcome these user's interfacing limitations, several technologies are emerging. These technologies are intended to provide Internet service providers, telecommunications carriers, and Internet-based businesses what they need to offer Web content (originally intended to be displayed on PCs and laptops) to users of wireless devices. For example, IBM's WebSphere Transcoding Publisher:

***http://www-4.ibm.com/software/webservers/transcoding/***

translates existing information and images on Web sites into a format readable by hand held devices, such as cell phones, games consoles, PDAs or Web browsers installed in cars. The aim of transcoding is, for example, to re-size a map. If a driver requests a street map from his car-based Web browser, the transcoding software can take a map originally designed for a PC-based browser and can re-size it to fit the screen of the mobile device installed in the car. However, with the today available technology, a paper road map of normal size and resolution cannot be read comfortably after having been digitized, minimized, and displayed on the small screen of a cell phone or even on the screen of a hand-held PDA. Thus, even if transcoding is a good solution to adapt the format of highly textual Web pages, this technique does not solve the problem of displaying, even with the minimum comfort, a digitized version of a full size paper map on a small size and low resolution display of a cell phone.

Apart from the herein commented technical and ergonomic limitations, the present invention is based on the recognition of two fundamental facts:

- **1) To locate one or several places, a collection of printed color maps can be much easier and quicker browsed than a sequence of digital maps screens.**

  Even if the enthusiasm of the public for new computer-based multimedia services has been seen by many analysts as a threat to the conventional forms of hard-copy publishing, particularly book publishing, the experience teaches that reading a book cannot be compared with reading an electronic media. In fact, people are very skilled at browsing through paper catalogs, magazines, newspapers, maps and books by flipping through the pages and glancing at pictures and text. In fact, today, reading paper remains preferable for most people, whether they are familiar with computers or not. Publication entitled "The Last Book", IBM Systems Journal, Vol 36, No. 3 Vol 36, No. 3 - 1997, by J. Jacobson, B. Comiskey, C. Turner, J. Albert, and P. Tsao of the MIT Media Laboratory, clearly illustrates the differences between printed books and computer screens in the following terms:

  *"A book represents a fundamentally different entity than a computer screen in that it is a physical embodiment of a large number of simultaneous high-resolution displays. When we turn the page, we do not lose the previous page. Through evolution the brain has developed a highly sophisticated spatial map. Persons familiar with a manual or textbook can find information that they are seeking with high specificity, as evidenced by their ability to remember whether something that was seen only briefly was on the right side or left side of a page, for instance. Furthermore their haptic connection with the brain's spatial map comprises a highly natural and effective interface, when such information is embodied on actual multiple physical pages.*

  *Another aspect of embodying information on multiple, simultaneous pages is that of serendipity and comparison. We may leaf through a large volume of text and graphics, inserting a finger bookmark into those areas of greatest interest. Similarly, we may assemble a large body of similar matter in order to view elements in contrast to one another, such as might be done to determine which of a particular set of graphical designs is most satisfying".*

  The same arguments concerning the friendliness and usefulness of hard-copy books are applicable to hard-copy geographic maps. Paper maps have a number of useful properties:

  - Paper maps are larger;
  - They can be viewed, marked, or manipulated easier and faster;
  - They are portable, familiar and easily distributed.

  Thus, out of the above cited technical restrictions applicable to hand-held portable devices, even if the enthusiasm of the public for computer-based digital mapping can be seen as a threat to the conventional paper maps, the reality is that for many people, on real and practical circumstances, the friendliness, usefulness and availability of paper maps cannot be reproduced today with electronic maps. The use of paper maps remains preferable for most people, whether they are skilled or not in using computers.

- **2) Touching directly the objects we have around is one of the simplest, most instinctive, and universal human actions.**

  Finger pointing and touching are the most natural forms of human/machine interface. The action of touching is so simple and natural that navigating by means of touch screens require no training and no learning. In fact the pervasiveness robustness and versatility of the "touch technology" is transforming the way people are living, working, learning, and playing. The "Touch technology" is successfully used in many different applications, for example:

- **In industrial environments:** Environmentally-robust touch screens are increasing productivity under hazardous and hostile conditions that would cripple a standard Personal Computer and keyboard.

- **In hospitals:** Touch input helps doctors to prescribe medications to patients faster by allowing handwritten prescriptions.

- **In retail locations:** Interactive, through-the-window displays let customers shop whenever they want, even when a store is closed.

- **In mobile and consumer devices:** Touch and stylus input is the widely accepted input method for portable, and other mobile devices.

- **At tourist destinations:** User-friendly kiosks are a cost-effective way to help travelers to get information and make their own reservations.

The two main advantages of touching are:

- **Simplicity:** Touching with the fingertip is the simplest and more intuitive form of pointing and selecting an item, and
- **Versatility:** Touching is particularly adapted to applications where the use of a keyboard, a mouse or an optical pencil or stylus is not practical or is not well adapted to the user's service or comfort.

Traditionally, a touch panel is integrated into the computer display. The touch panel and the display forms a combination called "touch screen". The input device is integrated into the monitor, so no space is wasted, and the interaction of the user with the system is made easier. The system guides the user by showing different choices in the form of icons displayed on the screen. When the user touches the icon of its choice, the associated action is executed.

In conclusion, there is a real need to provide a system and method for enriching the static information provided by conventional paper documents, maps and drawings.

There is a need to locate on physical documents, items referenced in electronic documents while accessing through the Web hyperlinked information (mostly textual) related to these items.

There is a need to provide mobile users with additional information directly accessible from hard-copy documents and more particularly to illuminate on paper maps, places referenced on Web pages.

There is a need to display information on physical documents while keeping intact the integrity of these physical documents.

None of the methods described in the prior art discloses a method or system that would enable a user to see illuminated, on paper maps, locations of resources or services referenced in an electronic document.

### Objects of the invention

It is an object of the present invention to improve the current systems and methods of selecting, accessing and displaying electronic multimedia information or services.

It is a further object of the present invention to highlight, on a physical (hard-copy) document or physical surface, information related to items selected in an electronic (soft-copy) document while accessing multimedia information and/or services located in a user workstation or in one or a plurality of servers connected to a communication network.

It is a further object of the present invention to enable a user, when browsing a Web page comprising references to locations in the world (e.g., names of towns, oil posts, motels, buildings, hospitals, monuments, etc.), to receive visual indications showing the position of said locations illuminated over a physical map, even if said locations are not represented on said map.

### Summary of the invention

The present invention discloses a system and method of creating in an electronic document one or a plurality of hyperlinks to a physical document for locating on said physical document, one or a plurality of items referenced in this electronic document from an user system connected to an opto-touch foil placed on or under the physical document. The method comprises the steps of:

- defining referenced items in the electronic document; for each item referenced in the electronic document;
- determining absolute coordinates;
- defining an hyperlink to the physical document;
- encoding the absolute coordinates in the hyperlink.

The present invention further discloses an electronic document comprising one or a plurality of referenced items, each referenced item comprising an hyperlink to a physical document, each hyperlink comprising encoded absolute coordinates of the corresponding referenced item, this hyperlink being used for locating the item on said physical document from an user system connected to an opto-touch foil placed on or under this physical document.

The present invention further discloses a system and method of locating on a physical document one or a plurality of items referenced in an electronic document comprising hyperlinks to this physical document. The method for use in a user system connected to an opto-touch foil placed on or under said physical document, comprising the steps of:

- identifying the one or plurality of items referenced in this electronic document;
- identifying the physical document;

for each referenced item that has been identified :

- computing from the absolute coordinates, foil coordinates corresponding to the position of the item on the physical document.

The foregoing, together with other objects, features, and advantages of this invention can be better appreciated with reference to the following specification, claims and drawings.

### *Brief description of the drawings*

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :

- **Figure 1** shows the main components of the invention.

- **Figure 2** shows the internal structure of the opto-touch foil.

- **Figure 3** shows an example of transparent touch foil technology.

- **Figure 4** shows an example of transparent light-emitting foil technology.

- **Figure 5** shows the different components of the preferred embodiment of the invention.

- **Figure 6** shows a paper map and a Web page referencing locations on the map.

- **Figure 7** illustrates the method of calibrating the map.

- **Figure 8** shows how locations referenced on a Web page are illuminated by means of the opto-touch foil placed over the map

- **Figure 9** shows how to identify an highlighted location.

- **Figure 10** shows how the user can retrieve from the Web an information or service associated with a location

*Preferred embodiment of the invention*

The invention provides a system and a method for locating on physical documents items referenced in electronic documents and for accessing multimedia information and/or services located in a user workstation or in one or a plurality of servers connected to a communication network. More particularly, the invention discloses a system and method for highlighting on a paper map the geographic location of one or a plurality of places cited or referenced in a Web page.

In a particular embodiment, the invention relates to the creation in electronic documents of hyperlinks to physical documents and more particularly to a system and method for assigning geographic coordinates to items (for example places like towns, oil posts, motels, public buildings, water springs, historic monuments, factories, etc.) cited or referenced in an electronic document (for example cited in a Web page). The activation of a "geographic link" associated with a particular item results in highlighting the position of this item on a physical document, for example a paper map.

In a particular embodiment, the system comprises a transparent opto-touch foil placed aligned on a physical map and connected to a user workstation. The opto-touch foil generates optical signals highlighting the locations, on the physical map, of all places referenced in the electronic document. The system comprises means for computing the coordinates on the opto-touch foil of the locations referenced in the electronic document and for highlighting these locations on the physical map by luminous signals.

As soon as a physical map is selected, the user places the opto-touch foil on the map. The opto-touch foil is calibrated according to the scale of this map and according to the position and alignment of the opto-touch foil placed on or under the map. In a particular embodiment, this operation is executed first by entering the scale of the map into the workstation and second by pressing the opto-touch foil on a particular location called calibration location.

The system comprises means for sending from the opto-touch foil to the user workstation, the opto-touch foil coordinates corresponding to a point pressed by the user, and for associating these coordinates with geographic coordinates and with the address of another electronic document locally stored on the user workstation or accessible on a remote server connected to the network.

Once the map is calibrated, all locations that are referenced in the electronic document (geographically linked to the physical document) are automatically highlighted as spots of light by the opto-touch foil. Each time the user activates a "geographic link" to the map, a spot of light on the referenced location blinks on the map, helping the user to identify and locate the locations referenced in the electronic document (Web page).

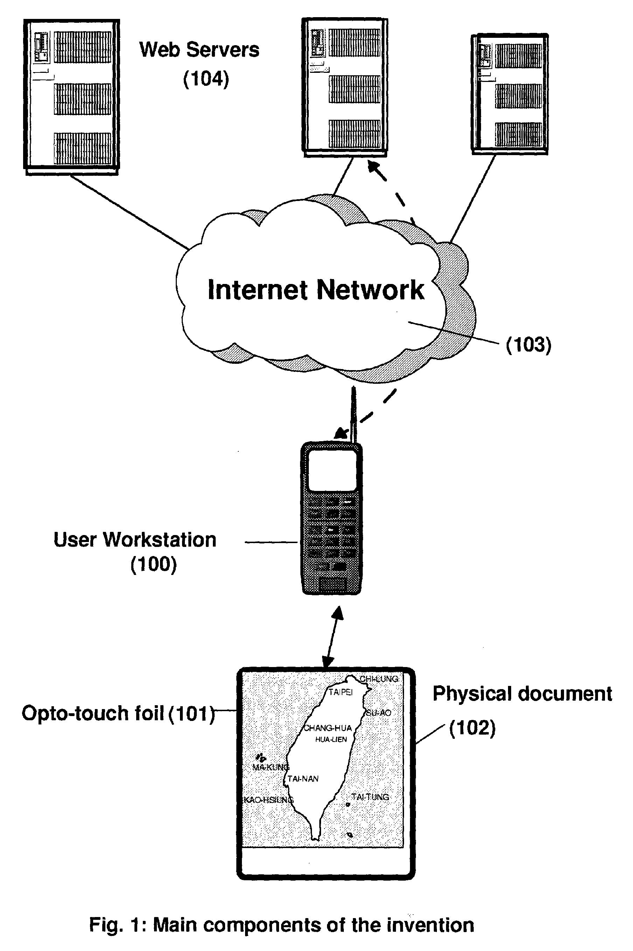

As shown in Figure 1, the system according to the present invention comprises :

- (100) A user workstation (preferably connected to a communication network) for accessing and displaying multimedia information and services.
- (101) An opto-touch foil, preferably transparent, connected to the user workstation (100).
- (102) A physical document, (e.g., an atlas), comprising one or a plurality of pages (e.g., the atlas maps) or a portion of a physical document (a page) placed aligned over or under the opto-touch foil (101).

**User Workstation**

The user workstation (100) can be an Internet enabled cell phone (e.g., the NOKIA 7110 or the 9110i Communicator), a PDA, an onboard computer, a network computer, an Internet appliance or any wireless IP enabled device, connected to the opto-touch foil (101).

In a preferred embodiment of the invention, the user workstation (100) is connected to the Internet network (103) and comprises a Web Browser application. Servers (104) are Web servers and the information or/and the service are Web pages hyperlinked to selected items and triggered from the Web browser. Locations associated to some items selected by the user on a Web page are illuminated by the opto-touch foil (101) placed over or under the physical document (102).

**Opto-Touch Foil**

In a preferred embodiment, the opto-touch foil (101) comprises a transparent resistive or capacitive film, of the type commonly used to manufacture touch screens. The generated signal is generally proportional to the coordinates of the point pressed. On this film is stacked a transparent organic light emitting device film (TOLED film). This light emitting device film is a transparent, bright, self-emitting display that can be directed to emit light from either or both surfaces. The opto-touch foil may communicate with the user workstation over an infrared link, a wired connection or any other communication means (e.g. by means of a wireless connection operating in the globally available 2.4 Ghz band of the "Bluetooth" specification, as promoted by the "Bluetooth Special Interest Group" and documented on the Official Bluetooth Website ***http://www.bluetooth.com/***).

**Physical Documents**

Physical documents (102) can be of any kind, for example, different types of geographic maps (e.g., topographical maps, political maps, historical maps, route maps, shaded relief maps, city maps, natural resources maps, rail road maps or even any other type of map), novel books, text books, technical plans, commercial catalogs or even any other type of hard-copy, engraved, written, or printed surfaces (e.g., paintings in a museum of art). The material of the physical documents can be paper, plastic, wood or any other material.

**SYSTEM FOR HIGHLIGHTING POSITIONS ON PHYSICAL DOCUMENTS WHILE SELECTING AND ACCESSING MULTIMEDIA INFORMATION**

The main components of the invention are the following:

**Opto-Touch Foil**

The opto-touch foil (101) comprises two, functionally independent transparent foils, namely:

- a touch foil, and
- a light emitting foil (opto foil).

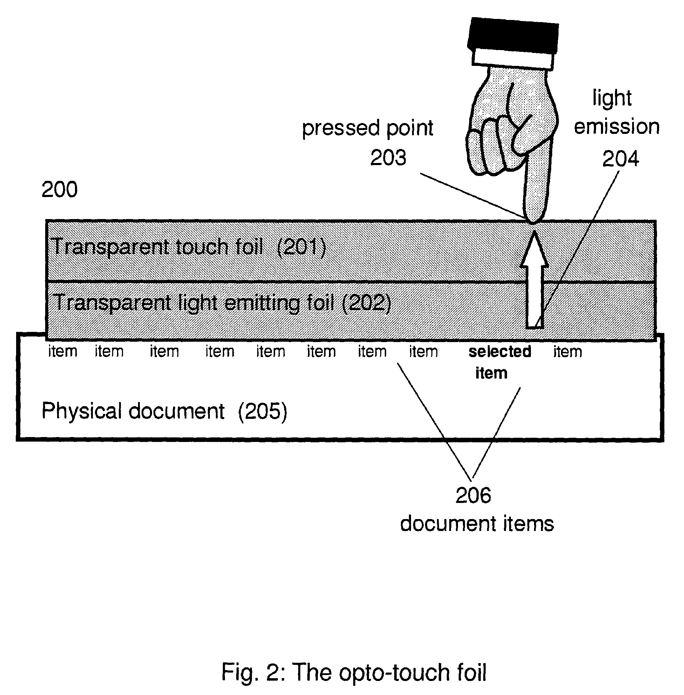

Figure 2 shows the cross section of an opto-touch foil (200) comprising:

- a transparent resistive or capacitive touch foil (201), of the type used commonly to manufacture touch screens. The generated signals are generally proportional to the coordinates of the point that is pressed or touched (203),
- a transparent light emitting foil (202), which is a transparent, bright, self-emitting display that can emit light (204) from either one or both surfaces.

The combination of both foils (i.e., the touch foil stacked over the light emitting foil) forms an opto-touch foil (200). Figure 2 represents an opto-touch foil placed and aligned over a physical document (205) comprising a plurality of items (206) (i.e., words, pictures, icons, etc.) printed (or written, painted, engraved ...) on its surface.

**Touch Foil Technology**

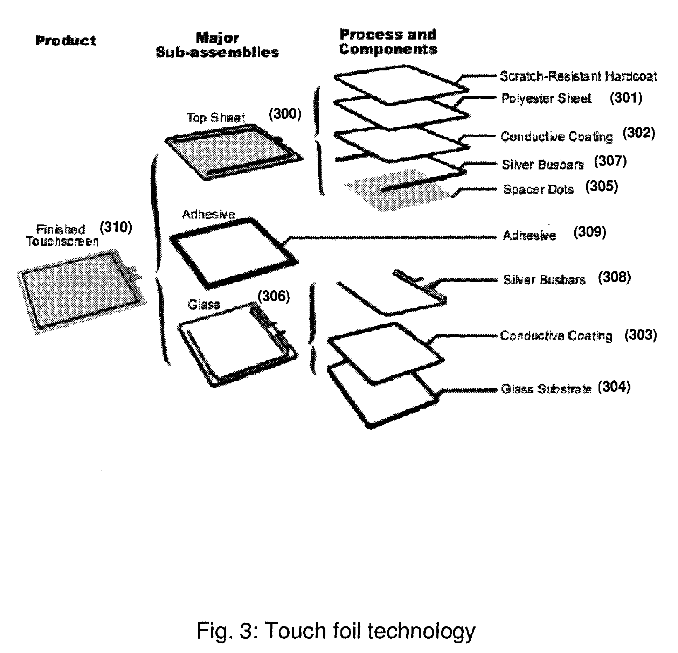

The touch foil component (201) may be made of transparent resistive or capacitive films of the type used commonly to manufacture touch screens. The generated signal is generally proportional to the coordinates of the point pressed. One example of touch foil technology it would be possible to use, is the TouchTek4 (4-wire Analog Resistive Touchscreens) of MICRO TOUCH company (TouchTek™ is a trademark of the MICRO TOUCH Company). The TouchTeck4 technology is fully described in the Web site of MICRO TOUCH Company at ***http://www.microtouch. com/.***
As illustrated in Figure 3, TouchTek4 touch screens (310) use a a polyester sheet (301) with a conductive coating (302) as a vertical conductive electrode, providing one-half of a touch coordinate. The topsheet (300) is separated from the bottom layer, a glass substrate (304) with a conductive coating (303), by spacer dots (305). The bottom sheet (306) is attached to the topsheet (300) by means of an adhesive (309). The bottom sheet (306) forms the horizontal conductive electrode, generating the second half of the touch coordinate. Silver bussbars located on the topsheet (307) and on the bottom sheet (308) pass the touch coordinates to the touchscreen controller. TouchTek4 touchscreens feature hard-coated polyester topsheets (300), available in several surface finishes. Spacer dots (305) are available in several dot arrays, optimized for finger, pen and finger, or pen-only input. The conductively-coated glass bottom sheet (303, 304) is available in several thicknesses. Electronic control is provided by a serial controller, or by 4-wire controllers. TouchTek4's specifications include narrow inactive border areas and compact touch sensors which allow system designers and OEMs to provide the largest useable screen area and full mouse emulation without sacrificing functionality or consuming excess power. Apart from being suited for implementing the touch foil functions of this invention, TouchTek4 touchscreens are commonly used in hand-held personal information management systems, PDAs, mobile computing systems, automotive, diagnostics and telecom devices, and Internet appliances. TouchTek4 touchscreens are engineered to accept more than three million touches to any area of the screen.

## Light Emitting Foil (Opto-foil)

The light emitting foil may be made of an array of TOLED's (Transparent Organic Light Emitting Devices), of the type used today to create vision area displays on windshields, cockpits, helmets and eyeglasses. TOLED displays, which can be up to 85% transparent when not energized are today manufactured with standard silicon semiconductors. One example of light emitting foil technology it would be possible to use is the technology used for the TOLEDs manufactured by UNIVERSAL DISPLAY CORPORATION. The TOLED technology is fully described in the Web site of UNIVERSAL DISPLAY CORPORATION at ***http://www.universaldisplay.com/toled.html***.

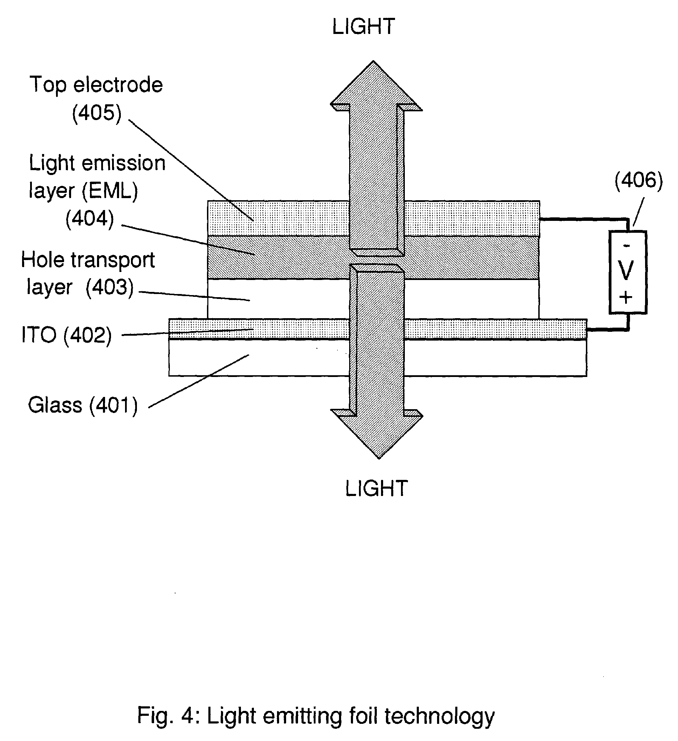

As illustrated in Figure 4, in its most basic form, a TOLED is a monolithic, solid-state device consisting of a series of "small molecule" organic thin films sandwiched between two transparent, conductive layers. As a result, TOLEDs are bright, self-emitting displays that can be directed to emit from either or both surfaces. This is possible because, in addition to having transparent contacts, the organic materials are also transparent over their own emission spectrum and throughout most of the visible spectrum. Typically, a transparent conductive material (402), e.g., indium tin oxide (ITO), for hole-injection is deposited directly onto a glass substrate (401). Then, a series of organic materials are deposited by vacuum sublimation on the ITO layer: The first organic layer (403) serves as a hole-transporting layer (HTL) and the second layer (404) serves as both a light-emitting (EL) and electron-transporting layer (ETL). Finally, a transparent top contact (405) is deposited for electron injection on top of the organic films. When a voltage (406) is applied across the device, it emits light. This light emission is based upon a luminescence phenomenon wherein electrons and holes are injected and migrate from the contacts toward the organic heterojunction under the applied electric field. When these carriers meet, they form excitons (electron-hole pairs) that recombine radiatively to emit light.

Since TOLEDs are thin-film, solid-state devices, they are very thin, lightweight and durable, ideal for portable applications, like the one disclosed in this invention. TOLEDs can be bottom, top, or both bottom and top emitting. Also, TOLEDs technology has attractive advantages regarding, transparency (TOLED displays can be nearly as clear as the glass or substrate they're on and when built between glass plates, TOLEDs are > 80% transparent when turned off), energy efficiency (for longer battery life), full viewing angle, bright and high contrast light emission, fast response time, and environmental robustness. Thus, TOLEDs are well suited for manufacturing the light emitting foil component used jointly with the touch foil according to the present of this invention.

## User Workstation

The user workstation (103) is used to access information and/or services stored locally or located on one or a plurality of servers (104) connected to the network (103). The user workstation may be, for example, an Internet appliance, a multimedia Personal Computer (PC), a set-top box, a TV monitor, a game console, a WAP protocol enabled cell phone, etc. The opto-touch foil may communicate with the user workstation by means of a cable, a wire pair, an infrared link, or a wireless radio link (e.g., a "Bluetooth" link).

## Access to Information

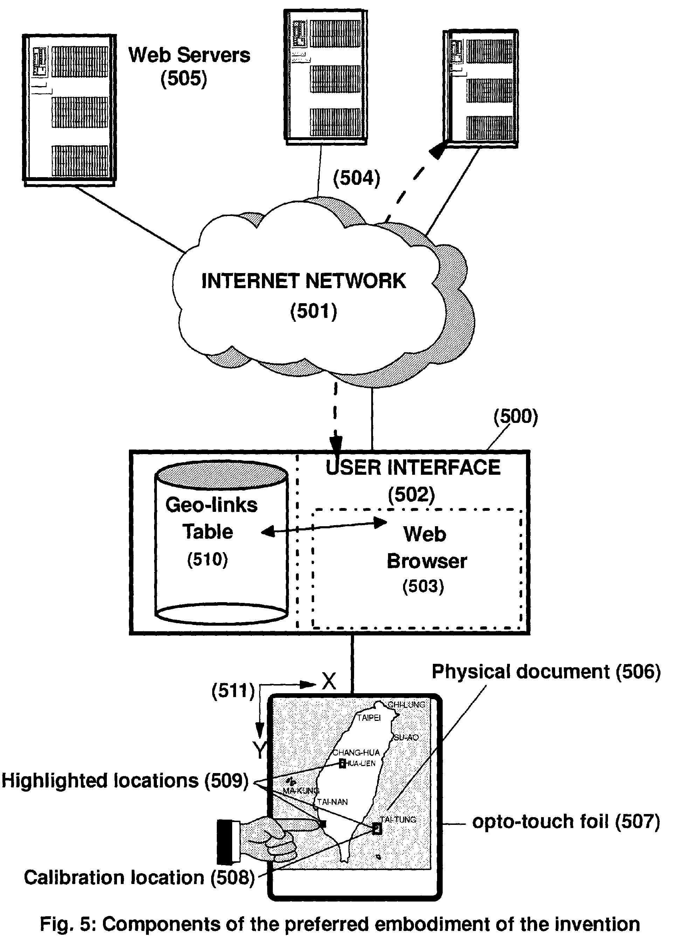

In a preferred embodiment, locations or places in the world (e.g., towns, oil posts, motels, buildings, bridges, monuments, etc.) are referenced in Web pages by means of cartographic coordinates. When someone triggers a so called "geographic link" on a Web browser, a visual signal illuminates the selected location over a physical map. In the arrangement shown in Figure 5, the user workstation (500) is connected to the Internet network (501). To access the World-Wide-Web (WWW), the workstation comprises a user interface (502) including a Web Browser (503) (also called "Web Client").

The method of illuminating on a physical map (506), locations referenced on a Web page comprises the following steps. First, the user takes a map covering the geographic area of the locations he wants to highlight. He places and aligns the map under the opto-touch foil (507) and enters the map scale in the workstation (500). To calibrate the opto-touch foil (507), the user selects on the Web page the "geographic link" of a particular location (calibration location) represented on the paper map. The opto-touch foil is calibrated by pressing the opto-touch foil on said location (508). As soon as this operation is executed, the locations (509) in the Web page for which a geographic link is defined, are automatically highlighted on the map by means of spots of light emitted by the opto-touch foil (507). These geographic links are stored in a table called "Geo-links Table" (510). Each time the user triggers a geographic link on the Web page, the spot of light corresponding to this location blinks on the map.

When a location is selected on the map or on the Web page, the Web Browser program (503) sends a HTTP request (504) to the identified Web Server (505). A response (HTTP response) is sent back by the Web Server (505) in the reverse direction to the Web Browser (503). The HTTP response comprises the requested Web page which is associated with the selected illuminated item.

**Geographic Links on Soft-copy Documents**

The definition of hyperlinks from an electronic document to a physical document implies the encoding of the absolute coordinates of the items referenced in the electronic document.

In a preferred embodiment, these hyperlinks are defined as "geographic links" (or "geo-links") and comprise the encoded geographic (cartographic) coordinates of the locations referenced in the electronic document (or Web page). These geographic links are defined in the form of an extension of HTML (Hyper-Text Markup Language), with the following syntax:

<center>**<geo href=** "hyperlink-URL"     **lat= Latitude     lon= Longitude >** Location_Name **</geo>**</center>

This geographic link associates an item related to a location (Location_Name) with the cartographic coordinates (**Latitude** and **Longitude**) of this location. Optionally, the geographic link associates a location (Location_Name) with the Universal Resource Locator ("hyperlink-URL") of another electronic document.

Using an HTML extension of this type, the HTML source code of a Web page like the page hereunder,

---

**Getting Around, Taking Precautions**

If traveling from <u>Zagreb</u> via <u>Karlovac</u> and down through <u>Knin</u> you will cross the region known as Lika. This is a mountainous stretch through which runs the length of the Mala Kapela hills. There is a lovely section of national park known as Plitvice Jezera. At the center of the park is the <u>Hotel Bellevue</u> and if you get in trouble on the road or run into inclement weather, it is a good place to hole up.  It is, however, pricey. Primary villages along this route include <u>Slunj</u>, <u>Plitvice</u>, <u>Udbina</u>, and <u>Gracac</u>. Between them is little or nothing.

---

can appear as follows:

---

```
<TITLE>Getting Around, Taking Precautions</TITLE>
If traveling from
<geo href= "http://www.interconti.com/croatia/zagreb/hotel_zagic.html"  lat= N 045° 36'
04"  lon= E 016° 12' 20" > Zagreb </geo> via
<geo href= "http://www.hr/hrvatska/HRgradovi/Karlovac/uvod-en.htm"  lat= N 045° 28' 17"
lon= E 015° 43' 35"  > Karlovac </geo> and down through
<geo href= "http://www.sibenik-knin.com/"  lat= N 044° 03' 21" lon= E 016° 15' 26" > Knin
</geo> you will cross the region known as Lika. This is a mountainous stretch through
which runs the length of the Mala Kapela hills. There is a lovely section of national park
known as Plitvice Jezera. At the center of the park is the
<geo href= "http://www.tel.hr/np-plitvice/smje/bellevue.htm"  lon= N 044° 18' 46" lat= E
015° 45' 06" > Hotel Bellevue
</geo> and if you get in trouble on the road or run into inclement weather, it is a good
place to hole up.  It is, however, pricey. Primary villages along this route include
<geo href= "http://mxl.xoom.com/slunj/" lon= N 045° 13' 53" lat= E 015° 40' 18" > Slunj,
</geo>
<geo href= ""  lon= N 044° 52' 38" lat= E 015° 44' 37" > Plitvice, </geo>
<geo href= "http://www.aiha.com/english/partners/biozad/zdkn.htm" lon= N 044° 31' 19" lat=
E 015° 45' 22"> Udbina, </geo> and
<geo href= "http://www.crotours.com/English/Beauties/Parks/velebit.htm" lon= N 044° 21'
07" lat= E 015° 48' 36"> Gracac. </geo> Between them is little or nothing.
```

---

**Opto-touch foil calibration**

On a terrestrial meridian, one meter corresponds (very approximately) to an arc of :

$$F = (90 \times 60 \times 60) / 10.000.000 = 0.0324 \; ("/m)$$

(i.e., seconds of arc per meter)

Let, by definition, **Fr** (mm/unit) be the resolution of the touch foil (i.e., the number of mm over axis X and Y (511) of the touch-foil that correspond to each unit of sensed signal, e.g., mVolts, assuming it is the same for both axis); and

Let **Ms** be the scale of the map (i.e., the number of terrestrial meters over the reference meridian per each mm measured on the map).

From the above definitions, parameter **K** is defined by the formula:

$$K = F \times Fr \times Ms \; ("/ \text{pulse})$$

Let **LATc, LONc**, the latitude and longitude of a calibration location selected on the Web page (measured in seconds of arc),

Let **Xc, Yc** the coordinates measured by the touch foil when the user presses on the calibration location on the map,

Let **LATo, LONo** the latitude and longitude on the map corresponding to the origin of the coordinates on the touch foil (i.e., to the point on the touch foil for which X=0 and Y=0).

The equations are:

$$LATo = LATc + K \times Yc$$

$$LONo = LONc - K \times Xc$$

Once LATo and LONo are known, the coordinates on the opto-touch foil also called foil coordinates (Xp, Yp) of any point P with latitude and longitude, LATp, LONp, (measured in seconds of arc) can be computed as follows:

$$Xp = (LONp - LON0) / K$$

$$Yp = (LAT0 - LAPp) / K$$

**"Geo-links" table**

When a Web page comprising geographic links is accessed, the information comprised in the geographic links of this Web page (locations names, cartographic coordinates and hyperlinks) are retrieved and stored in a table, named "geo-links" table (see in the next table, the first three columns of the geo-links table generated from the above example) . Now, once an opto-touch foil (with a known resolution Fr) and a physical map (with a known map scale Ms) has been selected, and once the calibration procedure is achieved (by sensing the foil coordinates (Xc, Yc) of the calibration location and by using the formulas described here above), the foil coordinates for all "geo linked" locations are computed (see the fourth column on the next table). The "geo-links" table is completed with the foil coordinates of all "geo-links" locations referenced in the Web page. These foil coordinates are transmitted from the user workstation to the opto-touch foil that decodes them. They are then used to illuminate the position of the "geo linked" locations on the physical map.

| Calibration Location: | URL: | Map Scale: | Foil Resolut. |
|---|---|---|---|
| Knin | http://www.linder.com/berserk/dalmatia.html | 1,250,000 | 0,2 |
| **LOCATION** | **HYPERLINK** | **LAT / LONG** | **FOIL X/Y** |

(continued)

| Calibration Location: | URL: | Map Scale: | Foil Resolut. |
|---|---|---|---|
| Zagrev | http://www.interconti. com/croatia/zagreb/hot el zagic.html | N 045° 36' 04" | - 000 |
| | | E 016° 12' 20" | - 000 |
| Karlovak | http://www.hr/hrvatska/HRgradovi/Karlovac/uv od-en.htm | N 045° 28' 17" | 060 |
| | | E 015° 43' 35" | 045 |
| **Knin** | **http://www.sibenik-kni n.com/** | **N 044° 03' 21"** | **235** |
| | | **E 016° 15' 26"** | **655** |
| Hotel Bellevue | http://www.tel.hr/np-p litvice/smje/bellevue. htm | N 044° 18' 46" | 085 |
| | | E 015° 45' 06" | 585 |
| Slunj | http://mxl.xoom.com/sl unj/ | N 045° 13' 53" | 050 |
| | | E 015° 40' 18" | 155 |
| Plitvice | | N 044° 52' 38" | 070 |
| | | E 015° 44' 37" | 290 |
| Udbina | http://www.aiha.com/en glish/partners/biozad/ zdkn.htm | N 044° 31' 19" | 110 |
| | | E 015° 45' 22" | 445 |
| Gracac | http://www.crotours.co m/English/Beauties/Par ks/velebit. htm | N 044° 21' 07" | 125 |
| | | E 015° 48' 36" | 555 |
| Note: "geo-link" *Plitvice* has no associated hyperlink. This is an example of non-hyperlinked "geo-link" location. | | | |

**METHOD FOR HIGHLIGHTING POSITIONS ON A PHYSICAL DOCUMENT WHILE SELECTING AND ACCESSING MULTIMEDIA INFORMATION**

The method of linking one or a plurality of items referenced in an electronic (soft-copy) document to geometric points on a physical (hard-copy) document, for automatically displaying these points using an opto-touch foil placed over the physical document, and for identifying on this physical document each one of the items referenced in the electronic document, comprises the steps of:

- determining the absolute coordinates of all items referenced on said electronic document;
- selecting a physical document representing at least the location of one item referenced in this electronic document;
- identifying and determining the scale of this physical document;
- placing the opto-touch foil aligned over or under the physical document;
- selecting an item that is both, referenced on the electronic document and represented on the physical document;
- calibrating the opto-touch foil by pressing the opto-touch foil on a calibrating location;
- highlighting by means of the opto-touch foil the points on the physical document corresponding to the items referenced on the electronic document;
- selecting an highlighted point on the physical document by pressing the opto-touch foil on this point and highlighting the corresponding referenced item in the electronic document;
- identifying the position on the physical document of an item referenced on the electronic document by activating the corresponding hyperlink and by making the point blinking on the physical document.

- acessing another electronic document by activating an hyperlink or by pressing on a point of the map corresponding to a referenced item.

The following example illustrates the method of using the system according to the present invention to help people to locate places of any kind, using conventional paper maps thanks to the information provided by the Web.

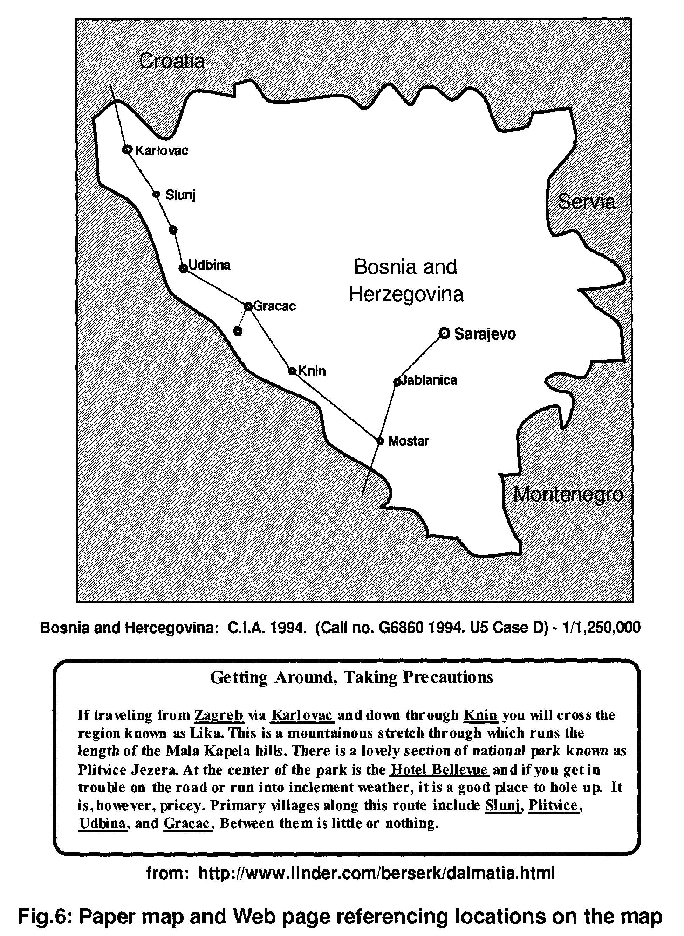

In this example a driver with a WAP enabled cell phone (like the one shown in Figure 1) is traveling across the Balkans. At some point on the way from Zagrev to Karlovac, the user with his cell phone, access a Web page on *http://www.linder.com/berserk/dalmatia.html.* This Web page provides some traveling and tourist information about the region he intends to visit today. On this page (on the small alphanumeric display of the device), he finds an interesting reference describing several places on his route. The driver then takes a paper map that he bought on Zagrev and tries to locate on this map the places referenced on this Web page. Figure 6 shows the information provided to the driver and the paper map of the region.

Glancing over the map, the driver locates several places referenced on the Web page, like Karlovac, Knin, Udbina and Gracac. However, he cannot locate other referenced places, like Zagrev, Hotel Bellevue, Slunj and Plitvice . Motivated by the tittle and the content of this page *"Getting Around, Taking Precautions",* the driver is particularly interested to determine the location on his route of the *"Hotel Bellevue".* But *"this place is not represented on the map !".*

To locate on the map all places referenced (i.e., the "geographic links") on the Web page (and more particularly, the *"Hotel Bellevue"*), as illustrated on Figure 1, the user takes an opto-touch foil (101) , connects it to his cell phone (100) (used as workstation) and places and fixes the map (102) underneath the opto-touch foil. Then the following tasks are performed:

### i) Calibrating the opto-touch foil

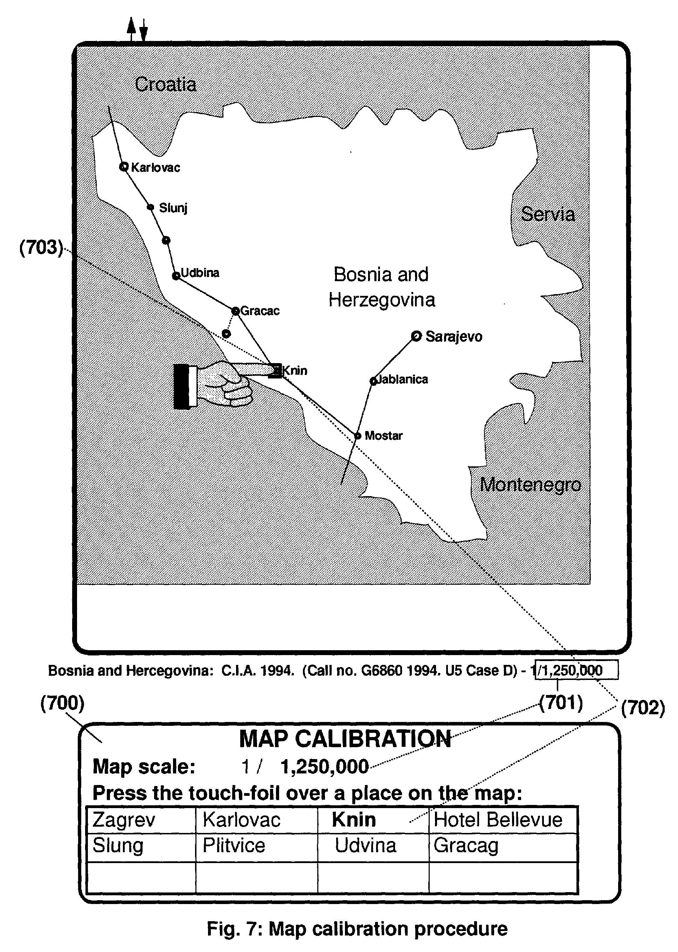

The calibration of the opto-touch foil is illustrated in Figure 7. To calibrate the opto-touch foil, the user :

- calls the opto-touch foil calibration procedure (700) from his workstation;
- enters the map scale (701) (e.g., 1 / **1.250.000**);
- selects a calibration location (702) among all locations displayed on his workstation (e.g. **Knin**). This location must correspond to a position represented on the map. To maximize the precision of this calibration procedure, it is advisable to choose, among all the the locations displayed at the same time on the workstation and represented on the map, a location positioned far from both foil axis (i.e., far from axis X, and far from axis Y) or, what is equivalent, relatively close to the diagonal axis X=Y and far from the foil origin point X=Y=0.
- presses the opto-touch foil (e.g., by using a pencil) on the point of the map where the selected calibration location (703) is located (i.e., **Knin**).

### ii) Highlighting on the map locations represented by a "geographic link" in the Web page

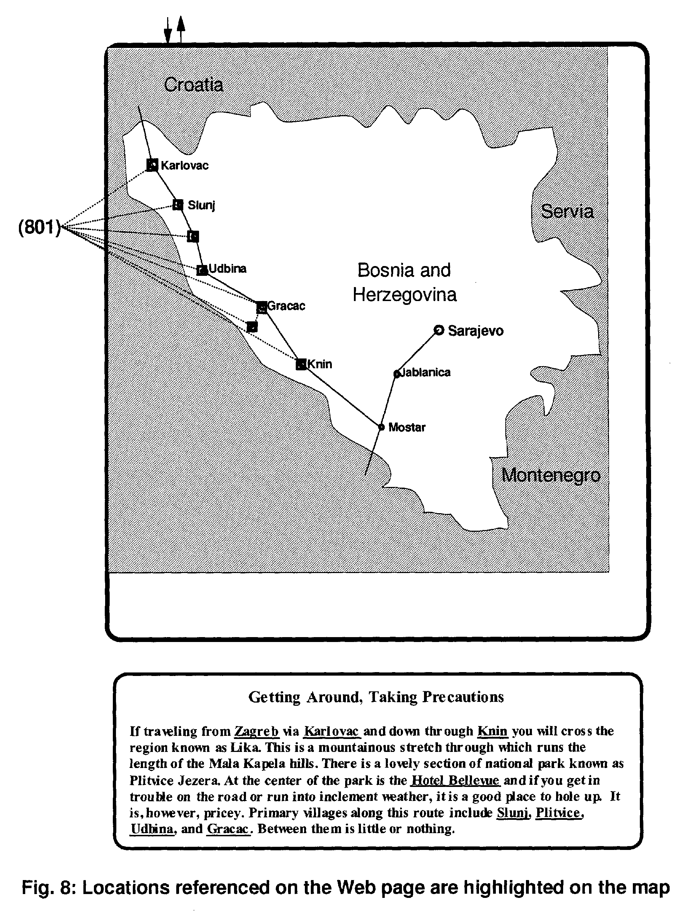

As shown on Figure 8, once the opto-touch foil has been calibrated, the locations inside the geographic area covered by the map, represented by a "geographic link" referenced in the Web page, are automatically highlighted on the map in the form of bright spots of light (801) emitted by the opto-touch foil. These spots of light are used by the user to see at a glance the positions of all referenced items on the map. On Figure 8, seven locations have been highlighted on the map, five of them are identified by a legend on the map (corresponding to the towns of Karlovac, Knin, Slunj, Udbina and Gracac). The other two light spots, not referenced on the map, correspond to any one of the remainder three places referenced on the Web page (i.e., Zagrev, Hotel Bellevue or Plitvice). These locations can be identified by the user.

### iii) Identifying on the map the "geographic links" referenced in the Web page

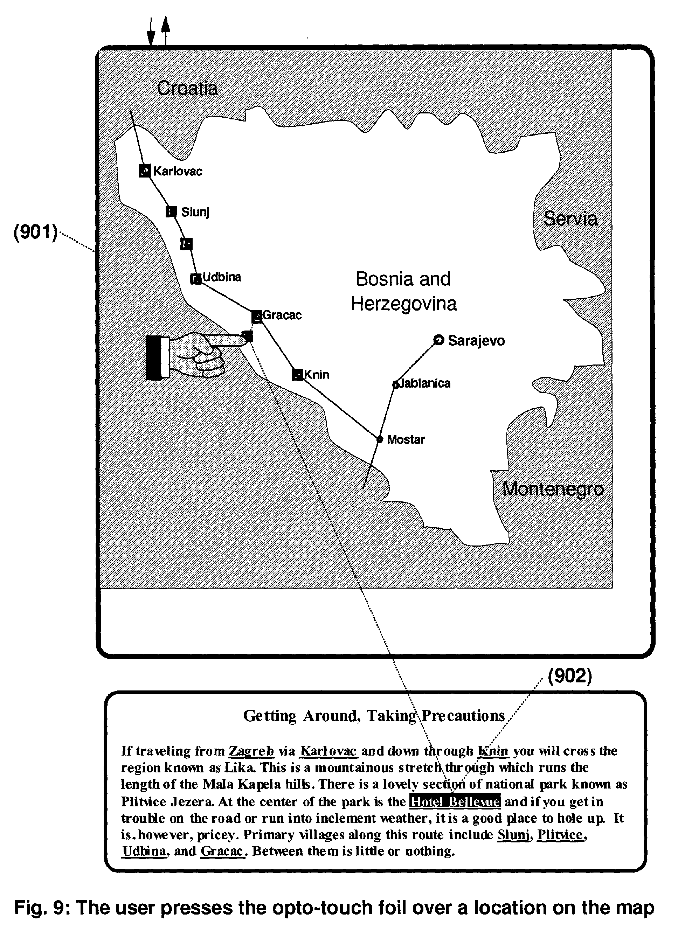

As shown in Figure 9, to recognize a location highlighted on the map but not identified (i.e., named) on this map, the user presses the opto-touch foil with a fingertip on the illuminated spot corresponding to this location (901). By doing this:

- The light spot emitted by the opto-touch foil on this location (901) of the map blinks, and
- The name of the "geographic link" (902) corresponding to this location is highlighted (e.g., in reverse video) on the Web page.

Figure 9 shows how the user can locate the *"Hotel Bellevue".*

**iv) Accessing the hyperlinked information**

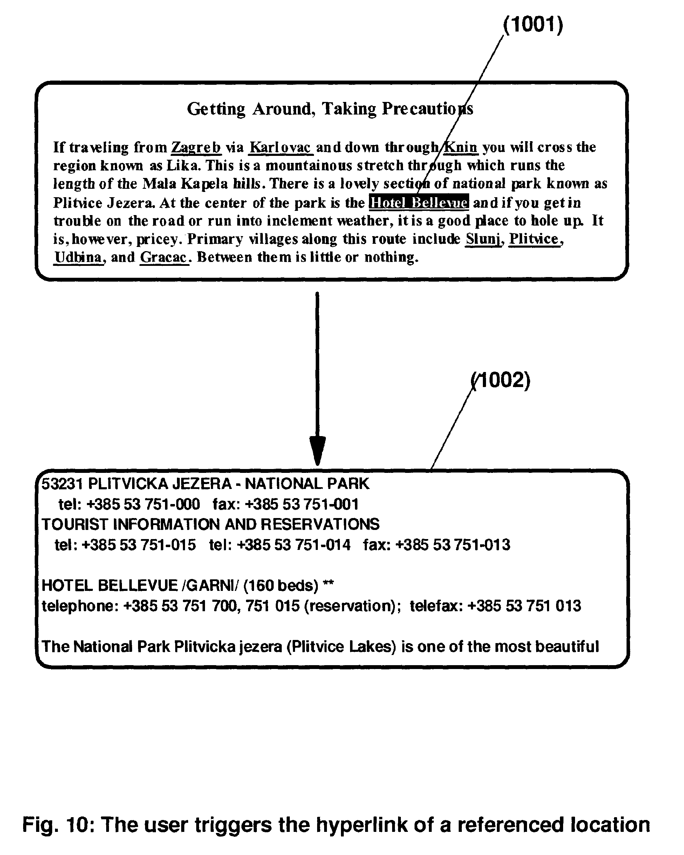

As shown in Figure 10, to access the information or service associated with an item referenced on the Web page (1001), the user activates the corresponding hyperlink from his workstation or from the physical document. The hyperlinked URL, if any, is then accessed throughout the Web, and the information on this URL address is retrieved and displayed on the user workstation (1002).

Figure 10 shows how the user can access information concerning the *"Hotel Bellevue"* on the Web simply by triggering the corresponding "geographic link" from his workstation.

Practically all types of published paper maps (e.g., provided by geographic or cartographic services or by third parties), at any scale, can advantageously be used by the present invention. Paper maps can be published and used independently of the Web pages placed on the Web servers. Because Web pages comprise the cartographic coordinates (i.e., with the "geographic links") of the locations to highlight on maps, hotels, restaurants, oil posts, pharmacies, shops or businesses of any type can be easily located and identified on these maps when browsing said Web pages, thus attracting the interest of potential customers. Public authorities can help people to locate, by means of hard-copy maps, all kinds of services, resources or places of cultural or economic interest.

Being apparent that, apart from the herein described applications, there are many other possible applications of this invention, what has been described is merely illustrative of the application of the principles of the present invention. Other arrangements and methods can be implemented by those skilled in the art without departing from the spirit and the scope of the present invention.

**Claims**

1. A method of creating in an electronic document one or a plurality of hyperlinks to a physical document (506) for locating, on said physical document, one or a plurality of items referenced in said electronic document from an user system (500) connected to an opto-touch foil (507) placed on or under said physical document (506), said method comprising the steps of:

   • defining referenced items in the electronic document;

   for each item referenced in the electronic document;

   • determining absolute coordinates;
   • defining an hyperlink to the physical document;
   • encoding said absolute coordinates in said hyperlink.

2. The method according to the preceding claim wherein said step of encoding said coordinates in this hyperlink comprises the further step of:

   • encoding an address of another electronic document in said hyperlink.

3. The method according to any one of the preceding claims comprising the further steps of:

   • reading the electronic document;
   • identifying the one or plurality of items referenced in said electronic document;

    for each referenced item :

   • storing in a table (510) the absolute coordinates; and optionally
   • storing in said table (510) the address of the other electronic document.

4. The method according to any one of the preceding claims comprising the further steps of:

   • identifying the physical document (506);

    for each referenced item referenced in the electronic document:

- computing foil coordinates (511) of the item;
- storing in the table (510) said foil coordinates (511).

5. The method according to any one of the preceding claims wherein:

   - said items are related to geographic locations (509);
   - said absolute coordinates are geographic coordinates;
   - said physical document (506) is a map.

6. The method according to any one of the preceding claims wherein:

   - the electronic document is an hyper text markup language (HTML) document;
   - hyperlinks associated with referenced items uses HTML syntactic conventions.

7. The method according to any one of the preceding claims wherein:

   - said user system (500) is a connected to the Internet Protocol network (501);
   - said electronic documents are Web pages;
   - said address is the Universal Resource Locator (URL) address of the Web server (505) hosting the other electronic document.

8. The method according to any one of the preceding claims wherein the step of encoding said absolute coordinates in said hyperlink comprises the further steps of:

   - computing the geographic coordinates (X, Y) associated with item referenced in the electronic document wherein said geographic coordinates are preferably expressed in term of longitude (X) and latitude (Y);
   - including said geographic coordinates in the hyperlink.

9. A user system comprising means adapted for carrying out the steps according to any one of the preceding claims.

10. A computer program comprising computer readable instructions for carrying out the method according to any one of claims 1 to 8.

11. An electronic document comprising one or a plurality of referenced items, each referenced item comprising an hyperlink to a physical document, each hyperlink comprising encoded absolute coordinates of the corresponding referenced item, said hyperlink being used for locating said item on said physical document (506) from an user system (500) connected to an opto-touch foil (507) placed on or under said physical document (506).

12. The electronic document according to the preceding claim wherein:

   - said items are geographic locations;
   - said absolute coordinates are geographic coordinates.

13. The electronic document according to any one of the 2 preceding claims wherein:

   - said electronic document is a hyper text markup language (HTML) document;
   - hyperlinks associated with referenced items uses HTML syntactic conventions.

14. The electronic document according to any one of the 3 preceding claims wherein said hyperlink comprises an encoded address of another electronic document.

15. The electronic document according to any one of the 4 preceding claims wherein:

   - said electronic documents are Web pages;
   - said address is the Universal Resource Locator (URL) address of a Web server (505) hosting the other electronic document.

16. The electronic document according to any one of the 5 preceding claims wherein the absolute coordinates of an item are expressed in term of longitude (X) and latitude (Y).

17. A method of locating on a physical document one or a plurality of items referenced in an electronic document according to any one of claims 11 to 16, said method for use in a user system connected to an opto-touch foil (507) placed on or under said physical document (506), comprising the steps of:

- identifying the one or plurality of items referenced in said electronic document;
- identifying the physical document (506);

for each referenced item that has been identified :

- computing from the absolute coordinates, foil coordinates (511) corresponding to the position of the item on the physical document.

18. The method according to the preceding claim comprising the further steps of:
    for each referenced item :

- storing in a table (510) the absolute coordinates;
- storing in the table (510) the foil coordinates (511); and optionally
- storing in the table (510) an address of another electronic document.

19. The method according to any one of the 2 preceding claims comprising the further step of:

- sending the foil coordinates (511) of one or a plurality of referenced items, for optically highlighting the position of said one or plurality of referenced items on the opto-touch foil placed on or under the physical document,

20. The method according to any one of the 3 preceding claims comprising the further step of:

- determining the foil coordinates of a point pressed on said opto-touch foil, said opto-touch foil (507) being pressed at a point corresponding to a selected referenced item;
- identifying the referenced item (902) corresponding to the point pressed (901) on the opto-touch foil referring to the table (510), said table comprising for each referenced item, the corresponding foil coordinates (511).

21. The method according to any one of the 4 preceding claims comprising the further step of:

- highlighting the selected referenced item (902) on the electronic document.

22. The method according to any one of the 5 preceding claims comprising the further step of:

- accessing the electronic document associated with the selected referenced item (902) referring to the table (510), said table comprising for each referenced item, the corresponding foil coordinates (511) and the address of an electronic document.

23. The method according to any one of the 6 preceding claims wherein said step of identifying the physical document comprises the further step of:

- storing in the table (510) an identification of the physical document;
- storing in the table (510) the scale (701) of the physical document.

24. The method according to any one of the 7 preceding claims wherein:

- said user system (500) is connected to the Internet Protocol network (501);
- said user system (500) comprises a Web Browser (503);
- said electronic documents are Web pages;
- said address is the Universal Resource Locator (URL) address of a Web server (505) hosting the other electronic document.

25. The method according to any one of the 8 preceding claims wherein the physical document (506) is a physical surface of any type such as an engraved, printed, painted, written surface, of any material such as paper, wood, plastic and of any form such as a newspaper, magazine, book, catalog, geographical map, photograph, painting.

26. A user system (500) comprising means adapted for carrying out the method according to any one of the 9 preceding claims.

27. A system (500, 507) comprising:

    •   an opto-touch foil (507) to be placed over or under a physical document;
    •   a user system (500) according to the preceding claim;
    •   a communication between said opto-touch foil and said user system.

28. The system according to the preceding claim wherein the opto-touch foil (507) is sensible to the pressure exercised over any point and comprises a transparent film with light emitting elements for optically highlighting selected positions on its surface.

29. A computer program comprising computer readable instructions for carrying out the method according to any one of claims 17 to 25.

Web Servers
(104)

**Internet Network**

(103)

User Workstation
(100)

Opto-touch foil (101)

Physical document

(102)

Fig. 1: Main components of the invention

pressed point
203

light
emission
204

200

Transparent touch foil  (201)

Transparent light emitting foil (202)

item    item    item    item    item    item    item    item    **selected**    item
**item**

Physical document  (205)

206
document items

Fig. 2: The opto-touch foil

Fig. 3: Touch foil technology

LIGHT

Top electrode
(405)

Light emission
layer (EML)
(404)

Hole transport
layer  (403)

ITO (402)

Glass (401)

(406)

−
V
+

LIGHT

Fig. 4: Light emitting foil technology

Web Servers
(505)

(504)

INTERNET NETWORK
(501)

(500)

USER INTERFACE
(502)

Geo-links
Table
(510)

Web
Browser
(503)

Physical document (506)

(511)

X

Y

CHI-LUNG

TAIPEI

SU-AO

CHANG-HUA
HUA-LIEN

Highlighted locations (509)

MA-KUNG

TAI-NAN

TAI-TUNG

opto-touch foil (507)

Calibration location (508)

Fig. 5: Components of the preferred embodiment of the invention

Bosnia and Hercegovina:  C.I.A. 1994.  (Call no. G6860 1994. U5 Case D) - 1/1,250,000

**Getting Around, Taking Precautions**

If traveling from Zagreb via Karlovac and down through Knin you will cross the region known as Lika. This is a mountainous stretch through which runs the length of the Mala Kapela hills. There is a lovely section of national park known as Plitvice Jezera. At the center of the park is the Hotel Bellevue and if you get in trouble on the road or run into inclement weather, it is a good place to hole up. It is, however, pricey. Primary villages along this route include Slunj, Plitvice, Udbina, and Gracac. Between them is little or nothing.

from:  http://www.linder.com/berserk/dalmatia.html

## Fig.6: Paper map and Web page referencing locations on the map

Bosnia and Hercegovina: C.I.A. 1994. (Call no. G6860 1994. U5 Case D) - 1/1,250,000

(700)    (701)    (702)

**MAP CALIBRATION**
**Map scale:**    1 / **1,250,000**
**Press the touch-foil over a place on the map:**

| Zagrev | Karlovac | **Knin** | Hotel Bellevue |
|--------|----------|----------|----------------|
| Slung | Plitvice | Udvina | Gracag |
| | | | |

**Fig. 7: Map calibration procedure**

(801)

Croatia

Karlovac

Slunj

Udbina

Gracac

Knin

Servia

Bosnia and
Herzegovina

Sarajevo

Jablanica

Mostar

Montenegro

**Getting Around, Taking Precautions**

If traveling from Zagreb via Karlovac and down through Knin you will cross the region known as Lika. This is a mountainous stretch through which runs the length of the Mala Kapela hills. There is a lovely section of national park known as Plitvice Jezera. At the center of the park is the Hotel Bellevue and if you get in trouble on the road or run into inclement weather, it is a good place to hole up. It is, however, pricey. Primary villages along this route include Slunj, Plitvice, Udbina, and Gracac. Between them is little or nothing.

**Fig. 8: Locations referenced on the Web page are highlighted on the map**

Fig. 9: The user presses the opto-touch foil over a location on the map

(1001)

**Getting Around, Taking Precautions**

If traveling from <u>Zagreb</u> via <u>Karlovac</u> and down through <u>Knin</u> you will cross the region known as Lika. This is a mountainous stretch through which runs the length of the Mala Kapela hills. There is a lovely section of national park known as Plitvice Jezera. At the center of the park is the **Hotel Bellevue** and if you get in trouble on the road or run into inclement weather, it is a good place to hole up. It is, however, pricey. Primary villages along this route include <u>Slunj</u>, <u>Plitvice</u>, <u>Udbina</u>, and <u>Gracac</u>. Between them is little or nothing.

(1002)

53231 PLITVICKA JEZERA - NATIONAL PARK
  tel: +385 53 751-000   fax: +385 53 751-001
TOURIST INFORMATION AND RESERVATIONS
  tel: +385 53 751-015   tel: +385 53 751-014   fax: +385 53 751-013

HOTEL BELLEVUE /GARNI/ (160 beds) **
telephone: +385 53 751 700, 751 015 (reservation);  telefax: +385 53 751 013

The National Park Plitvicka jezera (Plitvice Lakes) is one of the most beautiful

## Fig. 10: The user triggers the hyperlink of a referenced location